# EUROPÄISCHE PATENTSCHRIFT

(11) **EP 2 300 265 B1**
(45) Veröffentlichungstag und Bekanntmachung des Hinweises auf die Patenterteilung: **12.08.2015**
(21) Anmeldenummer: 09761438.2
(22) Anmeldetag: 06.06.2009
(51) Int. Cl.: B60N 2/225

(54) **VERFAHREN ZUR HERSTELLUNG EINES VERSTELLBESCHLAGES**
METHOD FOR PRODUCING AN ADJUSTMENT FITTING
PROCÉDÉ DE PRODUCTION D'UNE ARMATURE DE RÉGLAGE

(30) Priorität: 13.06.2008 DE 102008028088
(43) Veröffentlichungstag der Anmeldung: 30.03.2011
(73) Patentinhaber: Brose Fahrzeugteile GmbH & Co. KG, Coburg, 96450 Coburg (DE)
(72) Erfinder: SILLER, Jürgen, 95472 Rödental (DE); KRÜGER, Frieder, 96450 Coburg (DE); BLINZLER, André, 96271 Grub am Forst (DE); HARTLEB, Stephanie, 96279 Weidhausen (DE); WEISS, Matthias, 96472 Rödental (DE); ZELLMANN, Michael, 96120 Bischberg (DE); MÖLLER, Volker, 96450 Coburg (DE)
(74) Vertreter: FDST Patentanwälte
(86) Internationale Anmeldenummer: PCT/EP2009/004085
(87) Internationale Veröffentlichungsnummer: WO 2009/149875

(56) Entgegenhaltungen:
- WO-A1-2006/088896
- DE-A1- 2 921 588
- DE-U1-202005 014 192
- DE-U1-202007 012 004

## Beschreibung

Die Erfindung betrifft ein Verfahren zur Herstellung eines Verstellbeschlags, insbesondere für einen Fahrzeugsitz, mit einem einem ersten Beschlagteil zuordenbaren Außenrad mit einer Innenverzahnung und mit einem einem zweiten Beschlagteil zuordenbaren Innenrad mit einer Außenverzahnung, wobei das Innenrad mit Außenverzahnung in das Außenrad mit Innenverzahnung nach Art eines Taumelgetriebes exzentrisch zu einer Drehachse eingesetzt wird, wobei in einen sich zwischen der Drehachse und dem Innenrad gebildeten exzentrischen Aufnahmeraum zur Bildung einer variablen Exzentrizität Teilexzenter zueinander drehbar eingesetzt werden, wobei ein ein Eingriffsmittel aufweisendes Übertragungselement zur Betätigung der Teilexzenter derart eingesetzt wird, dass das Eingriffsmittel mit Mitnahmemitteln der Teilexzenter zusammenwirkt.

Ein Verstellbeschlag der eingangs genannten Art wird üblicherweise insbesondere zum Verstellen der Rückenlehne eines Fahrzeugsitzes eingesetzt. Hierzu wird beispielsweise der erste Beschlagteil mit der Rückenlehne und der zweite Beschlagteil mit der Sitzfläche des Fahrzeugsitzes verbunden. Der Einsatz eines Taumelgetriebes hat sich an dieser Stelle bewährt, da es eine mit vergleichsweise wenigen Elementen auskommende, gleichzeitig ein Getriebe umfassende Drehverbindung darstellt.

Ein derartiger Verstellbeschlag ist beispielsweise aus der DE 29 21 588 A1 bekannt. Das Taumelgetriebe umfasst dabei ein um die Drehachse drehbares Außenrad mit Innenverzahnung und ein zur Zentralachse exzentrisch im Inneren des Außenrads angeordnetes Innenrad mit Außenverzahnung. Dabei bilden das Außenrad und das Innenrad zueinander einen exzentrischen Aufnahmeraum, in dem ein erster und ein zweiter Teilexzenter gegeneinander verdrehbar angeordnet sind, wodurch eine variable Exzentrizität gebildet ist. Zur Betätigung des Taumelgetriebes ist als Übertragungselement eine mittels einer Verstellachse drehbare Mitnehmerscheibe vorgesehen. Die Mitnehmerscheibe weist Aussparungen auf, die mit auf den Teilexzentern angeordneten Mitnehmerstiften in Eingriff stehen. Weiter ist ein mechanisch wirkendes Kopplungselement (beispielsweise eine Feder) vorgesehen, welches im Ruhezustand des Verstellbeschlags die Teilexzenter so gegeneinander dreht, dass sich ihre Gesamtexzentrizität vergrößert. Hierdurch wird das Umlaufrad in eine Position gebracht, in welcher es spielfrei in das Außenrad eingreift. Bei einer Verdrehung der Mitnehmerscheibe wird über den Mitnehmerstift jeweils ein Teilexzenter verdreht, wodurch sich die Gesamtexzentrizität verkleinert. Hierdurch wird das Innenrad in eine Position gebracht, in welcher es mit Spiel in das Außenrad eingreift. Das Innenrad kann taumelnd mit umlaufender Exzentrizität über die Mitnehmerscheibe gegenüber dem Außenrad verdreht werden. Hierdurch verdreht sich mit entsprechender Übersetzung, die durch das Verhältnis der Zahnanzahl der Außenverzahnung des Innenrades zu der Zahnanzahl der Innenverzahnung des Außenrades bestimmt ist, der erste Beschlagteil relativ zu dem zweiten Beschlagteil.

Fertigungsbedingt weisen die Einzelteile des Verstellbeschlages stets Abweichungen von der Norm in Bezug auf ihre geometrischen Parameter auf. Es sind also stets gewisse Fertigungstoleranzen bei den Einzelteilen vorhanden. Beim eingangs beschriebenen Verstellbeschlag ist jedoch die Betätigung des Taumelgetriebes durch die Mitnehmerscheibe stark bauteilgeometriegebunden. Schon geringe Toleranzen bei der Fertigung können daher zur Folge haben, dass das Taumelgetriebe bzw. der Verstellbeschlag Umschaltspiel und Verlustwinkel aufweisen.

Weiterhin sind die Elemente der Mitnehmerscheibe und deren Steuergeometrie nur einseitig wirkend aufgebaut. Das bedeutet, dass bei nicht selbsthemmender Auslegung der Teilexzenter diese unter Last öffnen können. Die Grenzen, in denen die Exzentrizität verstellbar ist, ist wiederum durch die Toleranzen der Bauteile begrenzt. Dementsprechend können diese Fertigungstoleranzen hier eine Reduzierung der Festigkeit, übermäßiges Spiel bei entsprechender Last und ungleichförmigen Anlauf zwischen rechtem und linkem Verstellbeschlag zur Folge haben.

Bisher wurde diesen Problemen beispielsweise durch Auswahlmontage begegnet. Dies bedeutet, dass die nach Abweichung des einzelnen Teils von der Norm entsprechend ähnliche abweichende und daher besser passende Bauteile miteinander zu einem Taumelgetriebe kombiniert werden. Bei elektrisch angetriebenen Verstellbeschlägen wird teilweise auch ein zusätzlicher Exzenterträgerring eingebaut, welcher die Teilexzenter über Reibung betätigt. Durch diese Maßnahmen können jedoch die oben beschriebenen Nachteile durch die Fertigungstoleranz lediglich reduziert, nicht aber eliminiert werden.

Der Erfindung liegt daher die Aufgabe zugrunde, ein Verfahren zur Herstellung eines Verstellbeschlages der oben genannten Art anzugeben, bei dem trotz der Fertigungstoleranzen der Bauteile eine insgesamt höhere Qualität und eine höhere betriebliche Sicherheit des hergestellten Verstellbeschlages erzielt werden.

Diese Aufgabe wird erfindungsgemäß durch ein Verfahren mit der Merkmalskombination gemäß Anspruch 1 gelöst. Demnach erfolgt im eingesetzten Zustand eine Vermessung der Geometrie der Teilexzenter und die Geometrie des Übertragungselements wird anhand der Daten der Vermessung vor dem Einsetzen des Übertragungselements individuell angepasst.

Die Erfindung geht dabei von der Überlegung aus, dass eine insgesamt höhere Qualität und eine höhere betriebliche Sicherheit des Taumelgetriebes und des Verstellbeschlags erreicht werden könnte, wenn die im Herstellungsprozess unweigerlich auftretenden Fertigungstoleranzen ausgeglichen werden könnten. Da eine Reduzierung der Fertigungstoleranzen einen unangemessen hohen Aufwand bei der Herstellung der einzelnen Bauteile bedeuten würde, ist eine derartige Reduzierung jedoch nicht einfach realisierbar. Da die Fertigungstoleranzen der Bauteile also nicht eliminiert werden können, sollten sie zumindest im weiteren Herstellungsprozess berücksichtigt werden. Dabei ist insbesondere das mechanische Zusammenspiel zwischen den Teilexzentern und dem Übertragungselement zur Betätigung der Teilexzenter besonders empfindlich gegenüber Fertigungstoleranzen der Bauteile. Daher sollte eine Berücksichtigung der Fertigungstoleranzen insbesondere bei diesen Bauteilen erfolgen. Bei der Herstellung des Verstellbeschlages werden zunächst die beiden Teilexzenter in das Taumelgetriebe eingesetzt und anschließend das Übertragungselement aufgesetzt. Daher sollten im Herstellungsprozess die geometrischen Parameter der Teilexzenter vermessen werden, und anschliessend die Geometrie des Übertragungselements individuell zum Ausgleich der Fertigungstoleranzen auf diese geometrischen Parameter angepasst werden.

In vorteilhafter Ausgestaltung des Verfahrens wird insbesondere der Verdrehwinkel der Teilexzenter zueinander vermessen. Der Verdrehwinkel der Teilexzenter hat direkten Einfluss auf die Größe des Bereiches, in dem sich die Gesamtexzentrizität variieren lässt. Zur Verbesserung der betrieblichen Sicherheit des Verstellbeschlages sollte aber insbesondere die Variabilität der Exzentrizität in jedem Taumelgetriebe gleich sein, um einen gleichförmigen Anlauf des Taumelgetriebes zu gewährleisten, die Festigkeit zu erhöhen und das Spiel des Taumelgetriebes zu minimieren.

Das Übertragungselement steht mit den Teilexzentern über das Eingriffsmittel in mechanischem Kontakt. Um das Zusammenspiel zwischen Exzentern und Übertragungselement zu optimieren, sollte daher vorteilhafterweise die geometrische Lage und Ausdehnung des Eingriffsmittels angepasst werden.

Vorteilhafterweise werden in das Übertragungselement als Eingriffsmittel in Umfangsrichtung verlaufende Einkerbungen mit einer entsprechend der Vermessung angepassten Breite und/oder Position in eine Abschnittsfläche eingebracht. Dies ermöglicht eine vergleichsweise einfache Ausgestaltung des Übertragungselements und der Teilexzenter. Derartige Einkerbungen bieten eine einfache Möglichkeit des Erfassens von entsprechenden Fortsätzen der Teilexzenter und lassen sich zudem besonders einfach in Lage und Breite während des Herstellungsprozesses anpassen.

In vorteilhafter Ausgestaltung des Verstellbeschlages weisen die Teilexzenter als Mitnahmemittel jeweils einen radial über den Umfang hinaus erstreckenden Arm auf und das Übertragungselement als Eingriffsmittel einen sich im Wesentlichen axial erstreckenden Überhang mit angepassten Einkerbungen, wobei die Einkerbungen die Arme der Teilexzenter erfassen. In weiterer vorteilhafter Ausgestaltung weisen die Teilexzenter als Mitnahmemittel jeweils einen sich axial erstreckenden Arm auf und das Übertragungselement als Eingriffsmittel einen sich im Wesentlichen radial erstreckenden Überhang mit angepassten Einkerbungen, wobei die Einkerbungen die Arme der Teilexzenter erfassen. Je nach gewünschtem Auslegungsziel des Taumelgetriebes bedeutet dies, dass entweder das Übertragungselement planar gefertigt wird, d. h. sich im Wesentlichen nur in einer Ebene erstreckt und die Teilexzenter ein senkrecht zu dieser Ebene ausgedehntes Mitnahmemittel aufweisen oder alternativ die Teilexzenter planar gefertigt sind, während das Übertragungselement ein sich senkrecht zu dieser Ebene erstreckendes Eingriffsmittel aufweist.

Die mit der Erfindung verbundenen Vorteile bestehen insbesondere darin, dass durch die Vermessung der Geometrie der Teilexzenter und die Anpassung der Geometrie des Übertragungselements anhand der Daten dieser Vermessung beim hergestellten Verstellbeschlag ein minimales Umschaltspiel erreichbar ist sowie eine Minimierung des Verlustwinkels bei der Betätigung des Taumelgetriebes. Weiterhin ist eine vergleichsweise hohe Festigkeit und betriebliche Sicherheit des Verstellbeschlages realisierbar und es wird ein gleichförmiger und synchroner Anlauf zwischen rechts und links montiertem Verstellbeschlag erreicht. Durch die Vermeidung der Auswahlmontage können zudem Kosten und Bauteile im Herstellungsprozess eingespart werden.

Ein Ausführungsbeispiel der Erfindung wird anhand einer Zeichnung näher erläutert. Darin zeigen:
- FIG. 1: in einer Explosionsdarstellung einen Verstellbeschlag für einen Fahrzeugsitz, wobei das Außenrad als ein Hohlrad ausgebildet ist, in dem das Innenrad mittels eines Halteelements gegengelagert ist,
- FIG. 2: eine Detailansicht der variablen Exzentrizität eines Taumelgetriebes,
- FIG. 3: den fertig montierten Verstellbeschlag mit zwei Beschlagteilen nach FIG. 1,
- FIG. 4: das Außenrad und das Innenrad eines Taumelgetriebes,
- FIG. 5: die zwei Teilexzenter,
- FIG. 6: die auf den Kragenzug aufgesetzten Teilexzenter mit einem Übertragungselement zu ihrer Betätigung,
- FIG. 7: jeweils zwei Teilexzenter mit Übertragungselement in unterschiedlichen Geometrien mit planarer Auslegung des Übertragungselements, und
- FIG. 8: jeweils zwei Teilexzenter mit Übertragungselement in unterschiedlichen Geometrien, hier mit planarer Bauweise der Exzenter.

Gleiche Teile sind in allen Figuren mit denselben Bezugszeichen versehen.

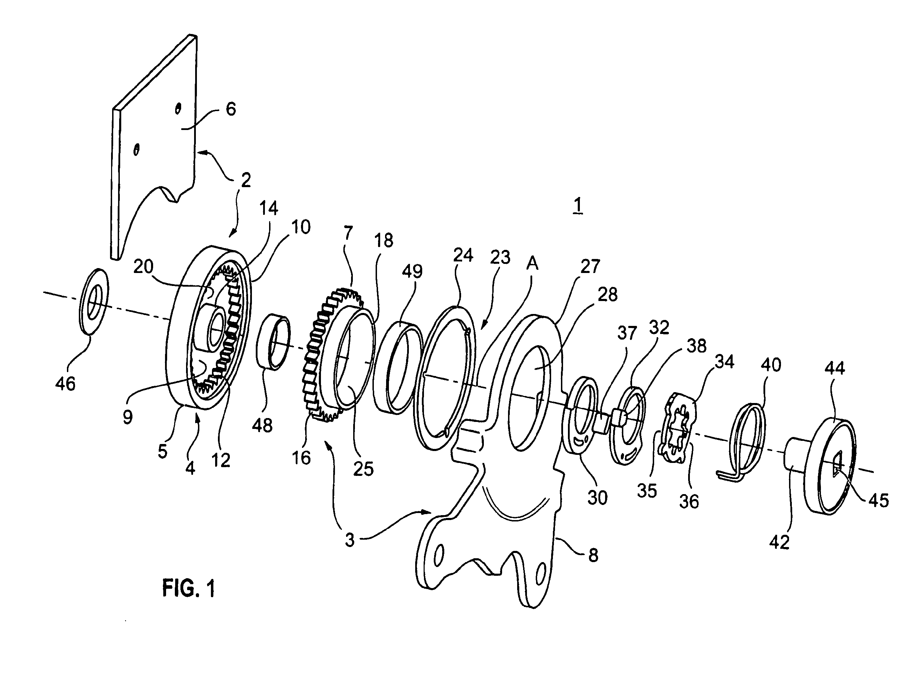

In Fig. 1 ist in einer Explosionsdarstellung ein Verstellbeschlag 1 für einen Fahrzeugsitz dargestellt. Der Verstellbeschlag 1 umfasst hierbei ein erstes Beschlagteil 2 und ein zweites Beschlagteil 3, die relativ zueinander um eine Drehachse A drehverstellbar sind. Das erste Beschlagteil 2 besteht aus einem Außenrad 4, welchem zur späteren Montage an einer Sitzlehne ein entsprechender Lehnenadapter 6, insbesondere mittels einer Schweißung, angebunden ist. Das zweite Beschlagteil 3 umfasst ein Innenrad 7 sowie einen mit diesem verbundenen Sitzadapter 8 zur Anbindung an ein Sitzunterteil.

Das Außenrad 4 ist als ein Hohlrad 5 mit einem Boden 9 und einer umlaufenden zylindrischen Außenwand 10 ausgebildet. An der Innenseite der Außenwand 10 ist eine axial zurückgesetzte Innenverzahnung 12 vorgesehen. Die Außenwand 10 ist in axialer Richtung über die Innenverzahnung 12 hinaus verlängert. Im Inneren des Hohlrads 5 ist weiter ein Kragenzug 14 angebracht, der eine zentrale Bohrung umläuft. In das Hohlrad 5 wird das Innenrad 7 eingefügt, welches eine umlaufende Außenverzahnung 16 und eine in axialer Richtung über die Außenverzahnung 16 hinaus verlängerte, zylindrische Innenwand 18 umfasst.

Zur Montage des Verstellbeschlags 1 wird das Innenrad 7 in den Innenraum 20 des Hohlrades 4 eingesetzt. Da der Außendurchmesser des Innenrads 7 gegenüber dem Innendurchmesser 12 des Hohlrades 4 einen verringerten Durchmesser hat, wälzt sich letzteres taumelnd unter Abrollung der Außenverzahnung 16 an der Innenverzahnung 12 in dem Hohlrad 5 ab. Die Anzahl der Zähne der Außenverzahnung 16 ist gegenüber der Anzahl der Zähne der Innenverzahnung 12 verringert, so dass sich das Innenrad 7 bei einem vollständigen Umlauf gegenüber dem Hohlrad 5 um die Zahndifferenz relativ verdreht.

Das Innenrad 7 wird axial bis zum Boden 9 in das Hohlrad 5 eingeführt. Anschließend wird ein Halteelement 23, welches als ein Haltering 24 ausgebildet ist, dem Innenrad 7 in den Innenraum 20 des Hohlrades 5 nachgeführt, wobei es die Innenwand 18 des Innenrades 7 umschließt. Der Haltering 24 weist einen gegenüber dem Innendurchmesser der Außenwand 10 geringfügig verringerten Außendurchmesser auf. Sein Innendurchmesser erlaubt die taumelnde Bewegung der umschlossenen Innenwand 18 des eingesetzten Innenrades 7. Die Außenverzahnung 16 des Innenrads 7 befindet sich auf einem umlaufenden Flansch, über den das Innenrad 7 an dem Haltering 24 gegengelagert ist.

Der Haltering 24 wird in axialer Richtung so weit gegen den Boden 9 des Hohlrads 5 bewegt, bis ein definiertes Axialspiel des Innenrads 7 eingestellt ist. Dies kann sowohl kraft- als auch weggesteuert geschehen. Bei einer kraftgesteuerten Einfügung werden Fertigungstoleranzen in der axialen Breite der Außenverzahnung 16 ausgeglichen. In der gewünschten Endposition wird der Haltering 24 umlaufend mit der Innenseite der Außenwand 10 verschweißt.

Durch das in das Hohlrad 5 eingesetzte Innenrad 7 wird zwischen dem Kragenzug 14 und der Innenwand 18 ein exzentrischer Aufnahmeraum 25 zur Aufnahme eines antreibenden Exzenters gebildet.

Der Sitzadapter 8 umfasst einen äußeren Ring 27, der über eine zentrale Öffnung 28 die Innenwand 18 des Innenrads 7 übergreift. Im montierten Zustand ist die Innenwand 18 mit dem äußeren Ring 27 des Sitzadapters 8 fest verschweißt.

In den exzentrischen Aufnahmeraum 25 sind zur Ausbildung einer variablen Gesamtexzentrizität ein erster Teilexzenter 30 und ein zweiter Teilexzenter 32 eingesetzt. Diese gemeinsam den Exzenter bildenden Teilexzenter 30,32 werden mittels einer aufgelegten Mitnehmerscheibe 34 gegeneinander verdreht, wodurch sich ihre Gesamtexzentrizität verändert. Hierzu weist die Mitnehmerscheibe 34 seitliche Aussparungen 35,36 auf, in die Mitnehmernasen 37,38 des ersten bzw. des zweiten Teilexzenters 30,32 eingreifen. Die Teilexzenter 30,32 sind mittels eines Federelements 40 zur Ausbildung einer maximalen Gesamtexzentrizität vorgespannt, wobei in dieser Position das Innenrad 7 spielfrei gegen das Außenrad 4 gedrückt ist.

Zum Antrieb des Verstellbeschlags 1 ist ein durchgehender Lagerzapfen 42 vorgesehen, der einen exzentrischen, in die Innenwand 18 seitlich eingreifenden Deckel 44 umfasst. In den Deckel 44 ist zum Antrieb eine Vierkantöffnung 45 eingefügt. Der Lagerzapfen 42 ist drehfest mit der Mitnehmerscheibe 34 verbunden. Zur Halterung des Lagerzapfens 42 ist gegenüberliegend ein Haltering 46 vorgesehen.

Um die Reibung der Teilexzentrizitäten 30,32 auf dem Kragenzug 14 und auf der Innenwand 18 zu verringern, sind eine innere Gleitlagerbuchse 48 und eine äußere Gleitlagerbuchse 49 vorgesehen. Die innere Gleitlagerbuchse 48 ist dabei dem Kragenzug 14 aufgesetzt. Die äußere Gleitlagerbuchse 49 ist in die Innenwand 18 eingesetzt.

Bei einer Betätigung des Lagerzapfens 42 werden über die Mitnehmerscheibe 34 die beiden Teilexzentrizitäten 30,32 unter Verringerung der ausgebildeten Gesamtexzentrizität gegen die Federspannung bewegt. Hieraus resultiert ein Spiel des Innenrads 7 gegenüber dem Hohlrad 5, so dass der Exzenter unter taumelndem Abrollen des Innenrads 7 in dem Hohlrad 5 rotiert werden kann. Die Beschlagteile 2,3 werden relativ zueinander die Drehachse A verstellt.

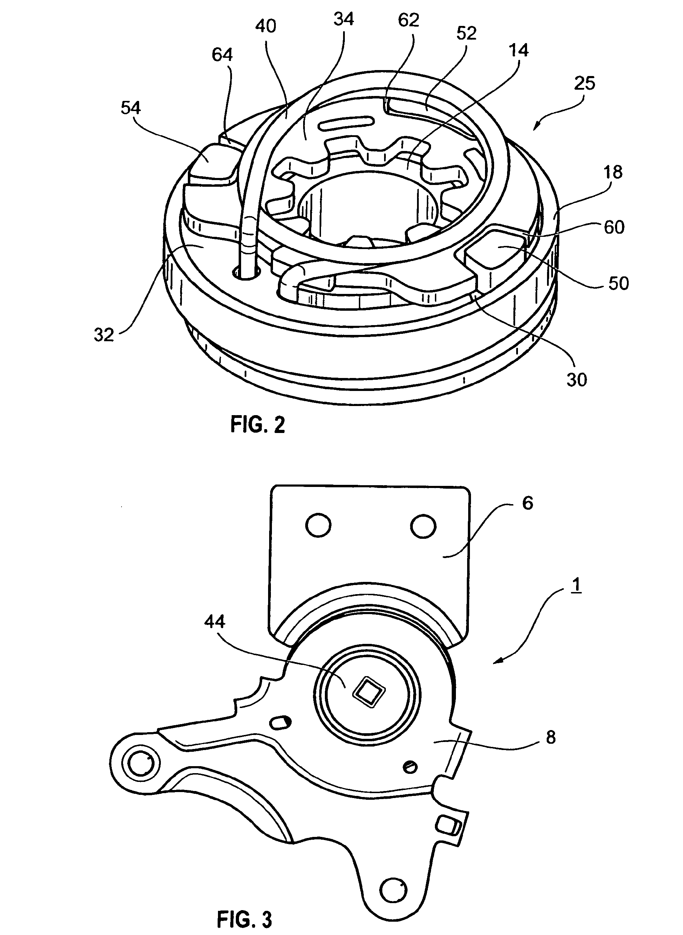

Die Fig. 2 zeigt den exzentrischen Aufnahmeraum 25, wobei hier der Kragenzug 14 sowie die Innenwand 18 gezeigt sind. Die Innenwand 18 ist mit dem nicht näher gezeigten Innenrad 7 verbunden, welches in dem fest mit den Kragenzug 14 verbundenen Außenrad 4 umläuft. Der durch die Innenwand 18 mit dem Kragenzug 14 gebildete exzentrische Aufnahmeraum 25 ist von zwei auf den Kragenzug 14 aufgesetzten Teilexzentern 30, 32 ausgefüllt. Dabei weisen die Teilexzenter 30, 32 Mitnahmemittel 50, 52, 54 auf, wobei hier der erste Teilexzenter 30 zwei Mitnahmemittel 50, 52 aufweist, und der zweite Teilexzenter 32 ein Mitnahmemittel 54. Bei der gezeigten Geometrie sind die Mitnahmemittel 50, 52, 54 als senkrecht aus der Ebene der Teilexzenter herausstehende Stifte ausgebildet und werden von entsprechenden als Einkerbungen ausgebildeten Eingriffsmitteln 60, 62, 64 der als Übertragungselement fungierenden Mitnehmerscheibe 34 erfasst.

Die Teilexzenter 30, 32 sind durch ein Federelement 40 gegeneinander vorgespannt, so dass im Ruhezustand, d. h. bei keiner Krafteinwirkung auf die Mitnehmerscheibe 34 die durch die Teilexzenter 30, 32 gebildete Exzentrizität maximiert wird und der exzentrische Aufnahmeraum 25 zwischen Kragenzug 14 und Innenwand 18 maximal ausgefüllt wird, so dass die Teilexzenter 30, 32 spielfrei in diesem liegen. Bei einer Krafteinwirkung auf die Mitnehmerscheibe 34 werden die Teilexzenter 30, 32 gegen die Kraft des Federelements 40 gegeneinander verdreht und durch den veränderten Verstellwinkel verringert sich die Exzentrizität, so dass das Taumelgetriebe betätigt werden kann.

Fig. 3 zeigt einen Verstellbeschlag 1 für einen Fahrzeugsitz mit dem Lehnenadapter 6 und dem Sitzadapter 8, welche für die Befestigung an einer Sitzfläche bzw. Sitzlehne eines Fahrzeugsitzes vorgesehen sind. Vom verbindenden Taumelgetriebe ist lediglich der Deckel 44 sichtbar.

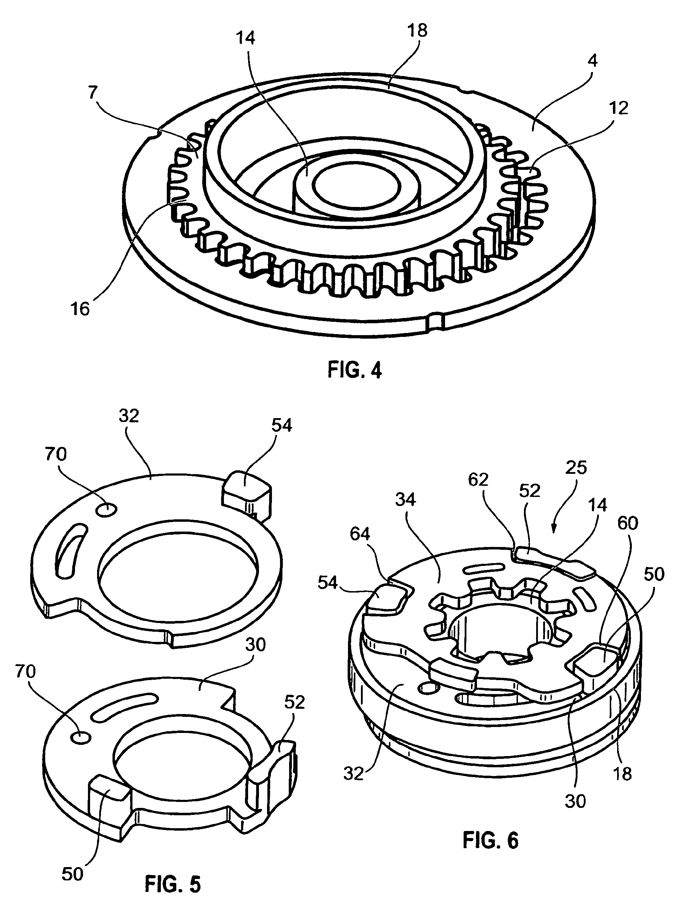

Fig. 4 zeigt das Außenrad 4 mit Innenverzahnung 12 sowie das in ihm umlaufende Innenrad 7 mit Außenverzahnung 16 und Innenwand 18. Dabei ist das Außenrad 4 mit dem Kragenzug 14 verbunden. Das Innenrad 7 hat eine geringere Anzahl an Zähnen als das Außenrad 4, wodurch eine entsprechende Übersetzung des Taumelgetriebes realisiert wird.

Fig. 5 zeigt einzeln den ersten Teilexzenter 30 sowie den zweiten Teilexzenter 32. Dabei sind deutlich die Mitnahmemittel 50, 52 auf dem ersten Teilexzenter 30 sowie das Mitnahmemittel 54 auf dem zweiten Teilexzenter 32 erkennbar. Weiterhin weisen die Teilexzenter 30, 32 Löcher 70 für die Aufnahme des Federelements 40 auf.

Fig. 6 zeigt nochmals exzentrischen Aufnahmeraum 25 aus der Fig. 2, zur besseren Erkennbarkeit jedoch ohne das Federelement 40. Deutlich ist hier der Eingriff der Mitnehmerscheibe 34 durch die Eingriffsmittel 60, 62, 64 im Zusammenspiel mit den Mitnahmemitteln 50, 52, 54 der Teilexzenter 30, 32 erkennbar.

Aufgrund von Fertigungstoleranzen insbesondere bei den Teilexzentern 30, 32 und der Lage der Mitnahmeelemente 50, 52, 54 kann der Verstellwinkel der beiden Teilexzenter 30, 32 zueinander variieren. Daher wird beim Herstellungsprozess der Verstellwinkel der Teilexzenter 30, 32 zueinander vermessen und die Geometrie der Mitnehmerscheibe 34, hier insbesondere ihrer Eingriffsmittel 60, 62, 64, entsprechend angepasst, um einen über die Produktion gleichmäßigen Verstellwinkel der Teilexzenter 30, 32 zueinander zu erzielen.

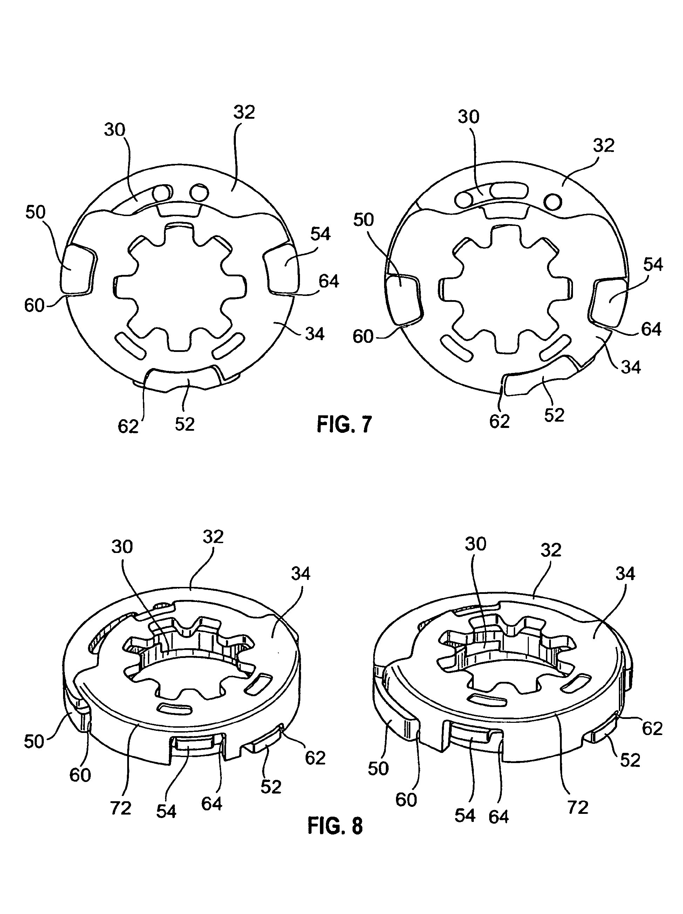

Fig. 7 zeigt jeweils zwei Teilexzenter 30, 32 und eine Mitnehmerscheibe 34. Dabei ist die Position der Eingriffsmittel 60, 62, 64 bei beiden Mitnehmerscheiben 34 jeweils unterschiedlich auf die jeweiligen Abweichungen in der Geometrie der Mitnahmemittel 50, 52, 54 der Teilexzenter 30, 32 angepasst. Durch die Anpassung der Eingriffsmittel 60, 62, 64 der Mitnehmerscheibe 34 lässt sich trotz der Fertigungstoleranzen in der Geometrie der Teilexzenter 30, 32 ein gleicher maximaler Verstellwinkel bei beiden in der Fig. 7 gezeigten Vorrichtungen erreichen. Die in der Fig. 7 gezeigte Ausführungsform zeigt eine planare Mitnehmerscheibe 34, während die Mitnahmemittel 50, 52, 54 der Teilexzenter 30, 32 senkrecht zur Ebene der Mitnehmerscheibe 34 stehen.

Fig. 8 zeigt eine alternative Ausführungsform, bei der die Teilexzenter 30, 32 planar ausgeführt sind und die Mitnahmemittel 50, 52, 54 sich im Wesentlichen radial nach außen erstrecken, während die Mitnehmerscheibe 34 eine senkrecht zur Ebene der Teilexzenter ausgebildete Kante 72 hat, welche die Eingriffsmittel 60, 62, 64 aufweist, die mit den Mitnahmemitteln 50, 52, 54 im Eingriff stehen. Auch bei dieser Ausführungsform lässt sich der Verstellwinkel bei beiden in der Fig. 7 gezeigten Vorrichtungen angleichen, indem die Geometrie der Teilexzenter 30, 32 im Herstellungsprozess vermessen wird und die Lage und Breite der Eingriffsmittel 60, 62, 64 der Mitnehmerscheibe 34 entsprechend angepasst wird.

**Bezugszeichenliste**

| | | | |
|---|---|---|---|
| 1 | Verstellbeschlag | | |
| 2 | erstes Beschlagteil | 48 | innere Gleitlagerbuchse |
| 3 | zweites Beschlagteil | 49 | äußere Gleitlagerbuchse |
| 4 | Außenrad | 50, 52, 54 | Mitnahmemittel |
| 5 | Hohlrad | 60,62,64 | Eingriffsmittel |
| 6 | Lehnenadapter | 70 | Loch |
| 7 | Innenrad | 72 | Kante |
| 8 | Sitzadapter | | |
| 9 | Boden | A | Drehachse |
| 10 | Außenwand | | |
| 12 | Innenverzahnung | | |
| 14 | Kragenzug | | |
| 16 | Außenverzahnung | | |
| 18 | Innenwand | | |
| 20 | Innenraum | | |
| 23 | Halteelement | | |
| 24 | Haltering | | |
| 25 | exzentr. Aufnahmeraum | | |
| 27 | äußerer Ring | | |
| 28 | zentrale Öffnung | | |
| 30 | erster Teilexzenter | | |
| 32 | zweiter Teilexzenter | | |
| 34 | Mitnehmerscheibe | | |
| 35,36 | seitliche Aussparung | | |
| 37,38 | Mitnehmernase | | |
| 40 | Federelement | | |
| 42 | Lagerzapfen | | |
| 44 | Deckel | | |
| 45 | Vierkantöffnung | | |
| 46 | Haltering | | |

## Patentansprüche

1. Verfahren zur Herstellung eines Verstellbeschlags (1), insbesondere für einen Fahrzeugsitz, mit einem einem ersten Beschlagteil (2) zuordenbaren Außenrad (4) mit einer Innenverzahnung (16) und mit einem einem zweiten Beschlagteil (3) zuordenbaren Innenrad (7) mit einer Außenverzahnung (16), wobei das Innenrad (7) mit Außenverzahnung (16) in das Außenrad (4) mit Innenverzahnung nach Art eines Taumelgetriebes exzentrisch zu einer Drehachse (A) eingesetzt wird, wobei in einen sich zwischen der Drehachse (A) und dem Innenrad (7) gebildeten exzentrischen Aufnahmeraum (25) zur Bildung einer variablen Exzentrizität Teilexzenter (30,32) zueinander drehbar eingesetzt werden, wobei ein ein Eingriffsmittel (60,62,64) aufweisendes Übertragungselement (34) zur Betätigung der Teilexzenter (30,32) derart eingesetzt wird, dass das Eingriffsmittel (60,62,64) mit Mitnahmemitteln (50,52,54) der Teilexzenter (30,32) zusammenwirkt, und wobei eine Vermessung der Geometrie der eingesetzten Teilexzenter (30,32) erfolgt und die Geometrie des Übertragungselements (34) anhand der Daten der Vermessung vor dem Einsetzen des Übertragungselements (34) individuell angepasst wird.

2. Verfahren nach Anspruch 1, bei dem der Verdrehwinkel der Teilexzenter (30,32) zueinander vermessen wird.

3. Verfahren nach Anspruch 1 oder 2, bei dem die geometrische Lage und Ausdehnung des Eingriffsmittels (60,62,64) angepasst wird.

4. Verfahren nach einem der Ansprüche 1 bis 3, bei dem in das Übertragungselement (34) als Eingriffsmittel (60,62,64) in Umfangsrichtung verlaufende Einkerbungen mit einer entsprechend der Vermessung angepassten Breite und/oder Position in eine Abschnittsfläche eingebracht werden.

5. Verfahren nach Anspruch 4, bei dem die Teilexzenter (30,32) als Mitnahmemittel (50,52,54) jeweils einen sich im Wesentlichen radial erstreckenden Arm aufweisen und in das Übertragungselement (34) als Eingriffsmittel (60,62,64) angepasste Einkerbungen eines sich im Wesentlichen axial erstreckenden Überhangs eingebracht werden, wobei die Einkerbungen die Arme der Teilexzenter (30,32) erfassen.

6. Verfahren nach Anspruch 4 oder 5, bei dem die Teilexzenter (30,32) als Mitnahmemittel (50,52,54) jeweils einen sich axial erstreckenden Arm aufweisen und in das Übertragungselement (34) als Eingriffsmittel (60,62,64) angepasste Einkerbungen eines sich im Wesentlichen radial erstreckenden Überhangs eingebracht werden, wobei die Einkerbungen die Arme der Teilexzenter (30,32) erfassen.

## Claims

1. A method for manufacturing an adjustment fitting (1), particularly for a motor vehicle seat, having an outer wheel (4) with internal teeth (12) that are associated with a first fitting part (2), and having an inner wheel (7) with external teeth (16) that are associated with a second fitting part (3), the method comprising:
inserting the inner wheel (7) with the external teeth (16) eccentrically to an axis (A) of rotation, in the manner of a wobble mechanism, in the outer wheel (4) with the internal teeth (12), placing eccentric cam parts (30,32) that form a variable eccentricity such that the eccentric cam parts (30,32) are rotatable with respect to one another in an eccentric receiving space (25) formed between the axis (A) of rotation and the inner wheel (7), and employing a transmission element (34) having engagement elements (60,62,64) to actuate the eccentric cam parts (30,32) such that the engagement elements (60,62,64) work together with carrier elements (50,52,54) of the eccentric cam parts (30,32), wherein a measurement of the geometry of the inserted eccentric cam parts (30,32) is made and the geometry of the transmission element (34) is individually matched based on the measurement data before insertion of the transmission element (34).

2. The method according to claim 1, wherein the angle of rotation of the eccentric cam parts (30,32) relative to one another is measured.

3. The method according to claim 1 or 2, wherein the geometric position and length of the engagement elements (60,62,64) is matched.

4. The method according to one of claims 1 to 3, wherein indentations extending in the circumferential direction with a width and/or position that is matched according to the measurement are introduced into a section of the surface in the transmission element (34) as engagement elements (60,62,64).

5. The method of claim 4, wherein each of the eccentric cam parts (30,32) has as carrier elements (50,52,54) an arm extending essentially radially, wherein as engagement elements (60,62,64) matched indentations in an overhang extending essentially axially are introduced in the transmission element (34), and wherein the indentations capture the arms of the eccentric cam parts (30,32).

6. The adjustment fitting according to claim 4 or 5, wherein each of the eccentric cam parts (30,32) has as carrier elements (50,52,54) an arm extending axially, wherein as engagement elements (60,62,64) matched indentations in an overhang extending essentially radially are introduced in the transmission element (34), and wherein the indentations capture the arms of the eccentric cam parts (30,32).

## Revendications

1. Procédé de fabrication d'un mécanisme ou d'une armature de réglage (1), notamment destiné à un siège de véhicule, comprenant une roue extérieure (4) à denture intérieure (16), qui peut être associée à une première pièce de mécanisme (2), et comprenant une roue intérieure (7) à denture extérieure (16), qui peut être associée à une deuxième pièce de mécanisme (3), procédé d'après lequel la roue intérieure (7) à denture extérieure (16) est mise en place dans la roue extérieure (4) à denture intérieure, de manière excentrée par rapport à un axe de rotation (A) à la manière d'une transmission à rotation-oscillation, d'après lequel des excentriques partiels (30, 32) sont mis en place de manière rotative l'un par rapport à l'autre, dans un logement d'accueil excentrique (25) formé entre l'axe de rotation (A) et la roue intérieure (7), pour réaliser une excentricité variable,
d'après lequel un moyen de transmission (34) présentant un moyen d'engrènement (60, 62, 64) pour l'actionnement des excentriques partiels (30, 32), est mis en place de manière telle, que le moyen d'engrènement (60, 62, 64) interagisse avec des moyens entraîneurs (50, 52, 54) des excentriques partiels (30, 32), et
d'après lequel on effectue une mesure de la géométrie des excentriques partiels (30, 32) mis en place, et l'on adapte individuellement la géométrie de l'élément de transmission (34) au regard des données de la mesure, avant la mise en place de l'élément de transmission (34).

2. Procédé selon la revendication 1, d'après lequel on mesure l'angle de rotation relative des excentriques partiels (30, 32) l'un par rapport à l'autre.

3. Procédé selon la revendication 1 ou la revendication 2, d'après lequel on adapte la position géométrique et l'étendue géométrique du moyen d'engrènement (60, 62, 64).

4. Procédé selon l'une des revendications 1 à 3, d'après lequel on réalise dans une surface de découpe de l'élément de transmission (34), en guise de moyen d'engrènement (60, 62, 64), des encoches s'étendant dans la direction périphérique et présentant une largeur et/ou une position adaptées à la mesure effectuée.

5. Procédé selon la revendication 4, d'après lequel les excentriques partiels (30, 32) présentent, en guise de moyen entraîneur (50, 52, 54), respectivement un bras s'étendant sensiblement de manière radiale, et l'on réalise dans l'élément de transmission (34), en guise de moyen d'engrènement (60, 62, 64), des encoches adaptées dans une partie en porte-à-faux s'étendant sensiblement de manière axiale, les encoches venant s'engager autour des bras des excentriques partiels (30, 32).

6. Procédé selon la revendication 4 ou la revendication 5, d'après lequel les excentriques partiels (30, 32) présentent, en guise de moyen entraîneur (50, 52, 54), respectivement un bras s'étendant de manière axiale, et l'on réalise dans l'élément de transmission (34), en guise de moyen d'engrènement (60, 62, 64), des encoches adaptées dans une partie en porte-à-faux s'étendant sensiblement de manière radiale, les encoches venant s'engager autour des bras des excentriques partiels (30, 32).
